# EUROPEAN PATENT SPECIFICATION

(11) **EP 0 460 051 B1**
(45) Date of publication and mention of the grant of the patent: **17.08.1994**
(21) Application number: 90903990.1
(22) Date of filing: 23.02.1990
(51) Int. Cl.: B60T 7/20, B60T 15/46

(54) **HYDRAULIC BRAKING DEVICE**
HYDRAULISCHE BREMSVORRICHTUNG
DISPOSITIF DE FREINAGE HYDRAULIQUE

(30) Priority: 23.02.1989 SE 8900632
(43) Date of publication of application: 11.12.1991
(73) Proprietor: GRONLUND, Rune, S-912 00 Vilhelmina (SE); LINDBLOM, Erik, S-911 00 Vännäs (SE)
(72) Inventor: GRONLUND, Rune, S-912 00 Vilhelmina (SE); LINDBLOM, Erik, S-911 00 Vännäs (SE)
(74) Representative: Onn, Thorsten
(86) International application number: SE9000129
(87) International publication number: WO9009913

(56) References cited:
- AU-B- 490 530
- DE-A- 3 121 586
- GB-A- 2 186 929

## Description

This invention relates to a hydraulic braking device for trailers and the like comprising a base in which a draw bar is displaceably journalled, and two hydraulic cylinders, the one hydraulic cylinder when operated being intended to influence the brakes of the trailer during movement in the one direction and the other hydraulic cylinder during movement in the other direction.

Trailers and caravans are today in most cases provided with mechanical brakes of pusher type. There are several problems connected with this type of brakes. Firstly, it is almost impossible to back the trailer in a uphill slope, since the mechanical brake in this position is not applied against the wheels of the trailer. Secondly, there is no braking effect on the trailer when an equipage comprising a traction vehicle and a trailer shall be backed in a downhill slope, since the mechanical brake of pusher type is not applied against the wheels of the trailer in this position. Thirdly, the mechanical brake of pusher type can easily get rusted up whereby the braking function is away.

This invention relates to remove the problems with this known technique and offer a hydraulic braking device which gives full braking effect on a trailer when that it needed and which makes backing operations in a uphill slope of an equipage comprising a traction vehicle and a trailer or the like connected to this vehicle possible. Moreover, this new invention makes full braking effect on the trailer during backing operations in a downhill slope of an equipage comprising a traction vehicle and a trailer/caravan possible.

However, a hydraulic braking device is previously known by DE-A-21 27 717. This known braking device comprises a separate hydraulic braking system for braking the trailer if it moves in one direction in relation to the traction vehicle and another separate hydraulic braking system for braking the trailer if this one moves in the other direction in relation to the traction vehicle. Each of these two hydraulic systems comprises a special means for influencing a hydraulic cylinder which in its turn is connected to the wheel couple of the trailer via a separate conduit. This means that the known braking device becomes very expensive to manufacture and very sensitive from a functional point of view.

This invention relates to offer a hydraulic braking device which is simplier regarding the construction and which becomes inexpensive to manufacture and gets a more reliable function than the known one. This has been made possible by a hydraulic braking device of the kind mentioned by way of introduction which has the features appearing from the claims.

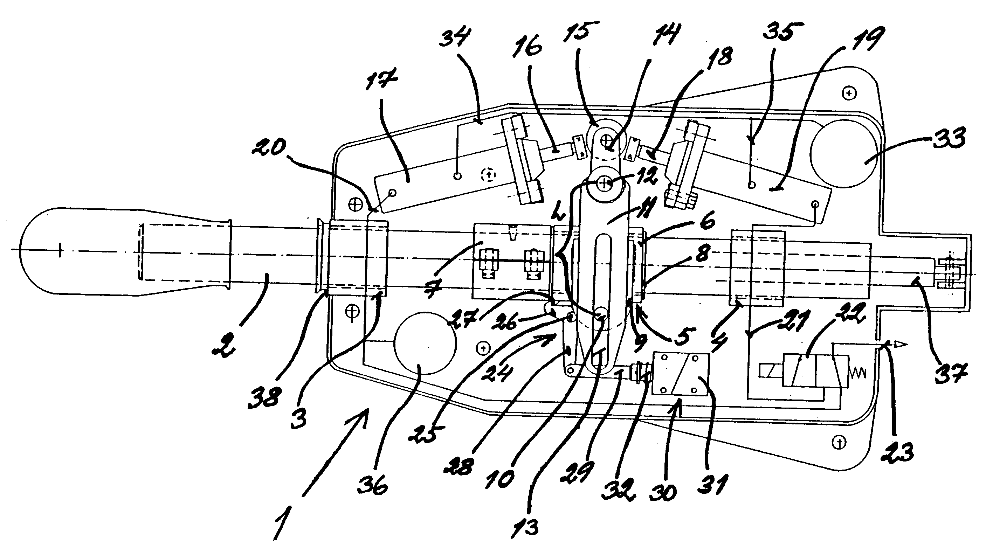

A preferred embodiment of the invention which is shown in the accompanying drawing will be described more closely below. The drawing shows a plan view of the device.

Referring to this drawing is shown there a braking device provided with a base 1, in which the parts of the braking device are arranged. The base is stationarily arranged on the frame of the trailer and preferably in its fore part. The trailer comprises a draw bar 2 which is centrally positioned on the base 1 and is displaceably arranged in relation to this one by means of bearings 3, 4. These bearings comprise bearing sleeves 3, 4, the bearing sleeve 3 being that one which is positioned at the very front of the draw bar 2, i.e. closest to the traction vehicle. Around the draw bar 2 there is arranged a dog means 5 comprising a sleeve-formed means 6, in relation to which the draw bar is turnable. Thus, the draw bar is turnable in relation to the chassis of the trailer. In order to prevent an axial movement of the sleeve-formed means 6 there is a stop means 7, 8 stationarily arranged on the draw bar 2 on each side of the sleeve 6. The stop means in front of the sleeve-formed means 6, seen in the drawing direction, comprises another sleeve-formed means 7, which is stationarily arranged on the draw bar, while the stop means behind the means 6 comprises a locking ring 8 which is also stationarily arranged on the draw bar. Of course, it is possible to place the means 7 behind the sleeve 6 and the locking ring 8 in front of the sleeve 6.

According to this embodiment there is a demand that the sleeve-formed means 6 shall not be able to be turned in relation to the base. Thus, in order to prevent such a turning the sleeve-formed means 6 has two longitudinal flanges, not shown, which are arranged on the lower part of the means 6 along the jacket surface of the means and on each side of a central vertical plane through the means 6. Each of these flanges rests on a longitudinal guide, which neither are shown in the drawing and which have a length exceeding the length of the mentioned flanges. These guides are fastened in the base. On the means 6 there is a plate 9 fastened which projects essentially radially in relation to the draw bar 2 so that the outer portion of the plate extends a bit outside the means 6. Thus, the longitudinal direction of the plate 9 is essentially perpendicular to the longitudinal direction of the draw bar. On the plate 9 there is a pin 10 detachably fastened. This pin projects essentially vertically from the plate 9 and is movable in the longitudinal direction of the plate 9. The pin is intended to cooperate with an oblong plate 11, the first end portion of which is pivotably fastened to a hinge 12 which in its turn is stationarily fastened in the base 1. The plate 11 in neutral position has an extension in the longitudinal direction which is essentially perpendicular to the longitudinal direction of the draw bar 2 and has a centrally arranged slot 13 which extends in the longitudinal direction of the plate from its other end portion to its first end portion. The slot 13 has a length corresponding to about 2/3 of the length of the plate 11 and is intended to cooperate with the pin 10 fastened on the plate 9.

Due to the fact that the sleeve-formed means 6 is arranged in relation to the base 1 in that way mentioned above the position of the plate 9 and the position of its pin means 10 in relation to the plate 11 can remain essentially intact during use even if the draw bar should be turned in relation to the chassis of the trailer, which could be the case if the one rear wheel of the trailer moves over a large stone.

The one end of an oblong arm 14, the length of which is only about 1/4 of the length of the plate 11 is fastened to the first end portion of the plate 11, that is the end portion which is pivotably fastened to the hinge 12. This means that when the plate 11 is pivoted round the hinge 12 to the left in the drawing, the arm 14 will be pivoted to the right round the hinge 12 and vice versa. The other end of the arm 14 has a wheel means 15 which when the arm 14 is pivoted to the left in the drawing is intended to influence the outer end of a first piston rod 16 arranged to a not shown piston which in its turn is displacebly arranged in a first hydraulic cylinder 17 that is stationarily fastened in the base 1 on one side of the draw bar 2. When the arm 14 is pivoted to the right in the drawing, the wheel means 15 will influence the outer end of a second piston rod 18 arranged to a not shown piston which is displaceably arranged in a second hydraulic cylinder 19 that is stationarily fastened in the base 1 on the same side of the draw bar as the first hydraulic cylinder.

By moving the pin 10 on the plate 9 the length L of the lever arm, i.e. the distance between the centre of the pin 10 and the centre of the hinge 12, can be changed. This means that it is possible to change the size of the force by which the wheel means 15 is forced against the piston rod 16, 18 of respective hydraulic cylinder 17, 19. Thus, a long lever arm L gives a larger press-ing force on the wheel means 15 than a short lever arm (a long lever arm L gives a larger braking force than a short lever arm). Due to that fact the braking device according to the invention can be used on trailers for different total weights.

Inside of each hydraulic cylinder 17, 19 there is arranged a not shown spring which is intended to rest against the inner portion of the piston means. This means that when the base 1 moves to the left in the drawing in relation to the draw bar 2, the plate 11 provided with the slot is pivoted round the hinge 12 to the right in the drawing, the arm 14 being pivoted round the hinge 12 to the left in the drawing and is accordingly applied against the outer end of the piston rod 16. Due to that fact the piston in the hydraulic cylinder 17 against the action of the mentioned spring will be forced further into the hydraulic cylinder so that a hydraulic medium is forced out of the cylinder via a conduit 20. This fact relates to braking the traction vehicle when driving forwards. However, if the base 1 moves to the right in the drawing in relation to the draw bar 2, the arm 14 is also pivoted to the right and is applied against the other piston rod 18. Due to that fact the plunger of the second hydraulic cylinder 19 is forced further into the same against the action of the mentioned spring, whereby the hydraulic medium is forced out of the cylinder 19 via a conduit 21. This fact relates when braking the traction vehicle during backing operations in a downhill slope. Both conduits 20, 21 go to an electric-controlled hydraulic valve 22 which is suitably in connection with the gear box of the traction vehicle via a contact of the reverse light. From the electric-controlled hydraulic valve 22 there is a conduit 23 for the hydraulic medium, which preferably consists of oil, extending to the wheels of the trailer 1.

The device according to the invention is so constructed that if a gear is put in in the traction device for driving forwards, the hydraulic medium is intended to be conducted from the hydraulic cylinder 17 via the electric-controlled valve 22 to the brakes of the trailer. However, if the reverse gear is put in, the electric-controlled hydraulic valve 22 is turned over so that the connection is opened for the hydraulic medium between the hydraulic cylinder 19 and the brakes of the trailer. Thanks to the arrangement with the electric-controlled hydraulic valve only one conduit for the hydraulic medium needs to be drawn to the wheels of the trailer.

In order that the device according to the invention shall function satisfactorily during use when travelling forwards, the draw bar ought to be able to be blocked in a certain position. For this purpose there is a pawl 24 arranged. This pawl 24 comprises an essentially right-angled formed means, which is pivotably journalled on a pin 25 which is stationarily fastened in the base 1 and projects essentially vertically from the same. The one part 26 of the right-angled formed means 26 extends essentially parallel with the longitudinal direction of the draw bar 2 and is provided with a hook being into engagement with a corresponding projection 27 of the sleeve-formed means 6. The other part 28 of the right-angled formed means 24 extends essentially perpendicularly in relation to the longitudinal direction of the draw bar 2. The outer portion of the part 28 is pivotably fastened to the front end of a bar 29 being an integral part of a solenoid valve 30. The bar 29 extending essentially parallel with the draw bar 2 is displaceable in its longitudinal direction by means of electric current. The solenoid is constructed in that way that when the reverse gear is put in in the traction vehicle the bar 29 is pulled towards the valve house 31 via an impuls from the contact of the reverse light. The operation of the solenoid 30 and the hydraulic valve 22 is suitably made via a relay. Furthermore, the solenoid 30 is provided with a return spring 32 which is intended to bring the bar 29 back to its original position when the reverse gear is put out and which is so arranged that during a falling off of the current, for instance during a brake in the connection from the contact of the reverse light, the solenoid takes such a position that a full braking effect exists when driving the equipage forwards.

When the pawl 24 is into engagement with the projection 27 of the sleeve-formed means 6, as is the case when driving forwards, the base 1 is prevented to move to the right in the drawing in relation to the draw bar 2. When braking the hydraulic cylinder 17 will be influenced by the means 15 of the arm 14. When the pawl 25 is out of engagement with the projection 27, as is the case during backing operations, the base 1 will be able to move to the right in the drawing in relation to the draw bar 2. This means that the arm 14 and the wheel means 15 will be able to influence the hydraulic cylinder 19, which in this case has a direct connection with the brakes of the trailer. This happens if the traction car brakes after a backing operation in a downhill slope. However, if the equipage comprising a traction car and a trailer should make a backing operation in a uphill slope, the arm 14 and the means 15 will go into engagement with the piston bar 16 of the hydraulic cylinder 17. However, no hydraulic oil will be forced out from the hydraylic cylinder 17 to the brakes of the trailer, since these ones has a contact only with the hydraulic cylinder 19 during a backing operation. This means that partly there is a full braking effect on the trailer during braking in a downhill slope, partly there is no resistance from the brakes of the trailer during a backing operation in a uphill slope as is the case when using conventional brakes of pusher type.

As has mentioned in the application the pawl 24 is into engagement with the sleeve-formed means 6 fastened on the draw bar 2. The pulling force from the draw bar to the base 1 and by that to the chassis of the trailer will accordingly be transmitted via the pawl 24. This construction solution gives a more reliable function of the trailer device, since the pulling force from the draw bar to the chassis of the trailer otherwise should be transmitted via the hydraulic cylinder 19, where the piston in this position is essentially immovable, since the hydraulic conduit 2 via the electric valve 22 is blocked.

As appears from the drawing there is a container 33 which when needed is intended to deliver a hydraulic liquid to the hydraulic cylinders 17, 19 via conduits 34, 35. As also appears from the drawing the device according to the invention can be provided with a pressure ackumulator 36 intended to moderate the pressure in the hydraulic conduit 20 which conducts a hydraulic liquid from the hydraulic cylinder 17, which is intended to be activated for braking when travelling forwards, to the brakes of the trailer. Especially in this conduit 20 the pressure otherwise could be very high.

In order to reduce the variations of the braking force and the vibrations during the course of the braking of the trailer there is a vibration damper 37 arranged inside the draw bar 2. The fore part of the vibration damper is fastened in the fore part of the draw bar 2 and the rear part of the damper 37 is fastened in the rear part of the base 1.

The whole construction in the base 1 is suitably enclosed by a dust proof and water proof casing, made of plastic material or metal. At the front portion 38 of the base 1 a protective means can be arranged which prevents dirty particles to come into the bearing sleeve 3 of the draw bar.

The new invention can be applied on trailers independently if they are provided with disc brakes or drum brakes. Furthermore, it is possible to build in a mechanical parking brake in the system.

The invention is, of course, not limited to the mentioned embodiment but can be modified within the scope of the following claims. Thus, for instance the means which is intended to influence the two hydraulic cylinders can be fastened on the draw bar, the means performing an essentially linear movement, which is essentially parallel with the linear movement of the draw bar. Furthermore, the mentioned means may instead of performing a circular-like movement as according to the described embodiment be so arranged that it performs an essentially linear movement which is essentially parallel with the linear movement of the draw bar.

## Claims

1. A hydraulic braking device for trailers and the like, comprising a base (1) in which a draw bar (2) is displaceably journalled in such a way that the draw bar (2) can move in relation to the base (1) in two opposite directions and two hydraulic cylinders (17, 19) which are arranged in the base (1), the one hydraulic cylinder when operated being intended to influence the brakes of the trailer when travelling in one direction and the other hydraulic cylinder when travelling in the other direction, **characterized** in that the device is so arranged that the two hydraulic cylinders (17, 18) are intended to be operated by the same means (11, 14, 15), and that the draw bar (2) is intended to influence the means (11, 14, 15) in that way that when the draw bar moves in relation to the base (1) in the one direction, the means (11, 14, 15) is intended to operate the one hydraulic cylinder (17, 19), and when the draw bar (2) moves in relation to the base (1) in the other direction, the means (11, 14, 15) is intended to operate the other hydraulic cylinder (19, 17).

2. A braking device according to claim 1, **characterized** in that the means which is intended to operate the two hydraulic cylinders (17, 19) is stationarily fastened on the draw bar and performs an essentially linear movement which is essentially parallel with the movement of the draw bar.

3. A braking device according to claim 1, **characterized** in that the means (11, 14, 15) is intended to be influenced by a sleeve-formed dog (5, 6), which is arranged around the draw bar (2) in such a way that the draw bar is turnable in relation to the dog, and that the dog (5, 6) is essentially immoveable in the longitudinal direction of the draw bar by means of stop means (7, 8) positioned on each side of the dog, seen in the axial direction of this one.

4. A braking device according to claim 3, the dog (5, 6) being arranged in that way that its position in relation to the base (1) can be kept essentially intact, **characterized** in that one in normal position essentially horizontal plate (9) with a longitudinal direction that is essentially perpendicular to the longitudinal direction of the sleeve-formed dog (5, 6) is fastened on the dog, the outer portion of the plate (9) extending preferably radially outside the dog, and that this outer portion has a pin (10) projecting essentially perpendicularly from the plate (9).

5. A braking device according to claim 4, **characterized** in that the means for influencing the hydraulic cylinders (17, 19) comprises an oblong, slot-provided plate (11), the one end portion is pivotably arranged on a hinge (12) which end portion is fastened to the one end portion of a arm (14), the other end portion of which is so designed that it can influence the piston of respective hydraulic cylinder (17, 19).

6. A braking device according to claim 5, **characterized** in that the slot (13) is centrally arranged in the plate (11) and extends from its other end portion towards the first end portion, which is pivotably arranged round the hinge (12) and that the length of the slot (13) is preferably larger than the length of the half of the plate (11).

7. A braking device according to claim 6, **characterized** in that the pin (10) of the plate (9) fastened on the dog (5, 6) is detachable and movable along the mentioned plate in the direction towards or from the hinge (12), which is fastened in the base (1) on the other side of the draw bar in relation to the pin (10) and at essentially the same axial distance, seen in relation to the draw bar, as the pin (10), whereby the lever (L), i.e. the distance from the centre of the pin (10) to the centre of the hinge (12), can be changed.

8. A braking device according to any one of the preceding claims, **characterized** in that a pawl (24) is hingedly fastened in the base (1) and has two end portions, the one end portion being able to be into engagement with the dog (5, 6) in order to prevent the draw bar (6) to move forwards in relation to the base (1), and the other end portion being hingedly fastened to a bar (29) being an integral part in an electric-controlled solenoid valve (30) and which can be displaced backwards against the action of a spring (32), whereby the pawl (24) can be loosened from the dog (5, 6).

9. A braking device according to any one of the preceding claims, **characterized** in that a conduit (20, 21) for the hydraulic medium extends from each hydraulic cylinder (17, 19) to an electric-controlled hydraulic valve (22), from where one single conduit (23) for the hydraulic medium extends to the brakes of the trailer.

10. A braking device according to claim 8 and 9, **characterized** in that the electric-controlled hydraulic valve (22) is so arranged that it breaks the connection between the one hydraulic cylinder (17) and the brakes of the trailer and opens the connection between the second hydraulic cylinder (19) and the brakes of the trailer when putting in the reverse gear in the traction vehicle, and that the bar (29) of the solenoid valve (30) pulls the pawl (24) out of its blocking position in relation to the dog (5, 6) when putting in the reverse gear, the impulses to the hydraulic valve (22) and the solenoid valve (30) going via the contact of the reverse light of the traction vehicle.

## Patentansprüche

1. Hydraulische Bremsvorrichtung für Anhänger und dergleichen, mit einer Grundplatte (1), in welcher eine Zugstange (2) verschiebbar gelagert ist, derart dass die Zugstange (2) in bezug auf die Grundplatte (1) in zwei entgegengesetzten Richtungen beweglich ist, und mit zwei hydraulischen Zylindern (17, 19), welche in der Grundplatte (1) angeordnet sind, wobei in einer Fahrtrichtung der eine hydraulische Zylinder dazu vorgesehen ist, bei dessen Betätigung auf die Bremsen des Anhängers zu wirken, und in der anderen Fahrtrichtung der andere hydraulische Zylinder, dadurch gekennzeichnet, dass die Vorrichtung so angeordnet ist, dass die zwei hydraulischen Zylinder (17, 18) von den gleichen Mitteln (11, 14, 15) betätigt werden, und dass die Zugstange (2) die Mittel (11, 14, 15) derart betätigt, dass die Mittel (11, 14, 15) bei einer Bewegung der Zugstange bezüglich der Grundplatte (1) in einer Richtung den einen hydraulischen Zylinder (17, 19) betätigen, und dass sie bei einer Bewegung der Zugstange (2) bezüglich der Grundplatte (1) in der anderen Richtung den anderen hydraulischen Zylinder (19, 17) betätigen.

2. Bremsvorrichtung nach Anspruch 1, dadurch gekennzeichnet, dass die Mittel zur Betätigung der zwei hydraulischen Zylinder (17, 19) fest mit der Zugstange verbunden sind und eine im wesentlichen lineare Bewegung ausführen, welche im wesentlichen parallel zur Bewegung der Zugstange verläuft.

3. Bremsvorrichtung nach Anspruch 1, dadurch gekennzeichnet, dass die Mittel (11, 14, 15) von einem hülsenförmigen Mitnehmer (5, 6) betätigt werden, der derart um die Zugstange (2) angeordnet ist, dass die Zugstange in bezug auf den Mitnehmer drehbar ist, und dass der Mitnehmer (5, 6) in Längsrichtung der Zugstange durch Anschläge (7, 8), welche in Axialrichtung des Mitnehmers gesehen auf beiden Seiten desselben angeordnet sind, im wesentlichen unbeweglich ist.

4. Bremsvorrichtung nach Anspruch 3, wobei der Mitnehmer (5, 6) derart angeordnet ist, dass seine Stellung in bezug auf die Grundplatte (1) im wesentlichen unverändert bleibt, dadurch gekennzeichnet, dass eine in Normalstellung im wesentlichen waagrechte Platte (9), deren Längsrichtung im wesentlichen senkrecht zur Längsrichtung der Mitnehmerhülse (5, 6) verläuft, am Mitnehmer befestigt ist, wobei sich der äussere Teil der Platte (9) vorzugsweise radial ausserhalb des Mitnehmers erstreckt, und dass dieser äussere Teil einen Bolzen (10) aufweist, der im wesentlichen senkrecht auf der Platte (9) steht.

5. Bremsvorrichtung nach Anspruch 4, dadurch gekennzeichnet, dass die Mittel zur Betätigung der hydraulischen Zylinder (17, 19) eine längliche, geschlitzte Platte (11) aufweisen, deren eines Ende schwenkbar auf einer Achse (12) gelagert ist und am einen Ende eines Arms (14) befestigt ist, und deren anderes Ende zur Betätigung des Kolbens des jeweiligen hydraulischen Zylinders (17, 19) ausgebildet ist.

6. Bremsvorrichtung nach Anspruch 5, dadurch gekennzeichnet, dass der Schlitz (13) in der Mitte der Platte (11) angeordnet ist und von deren anderem Ende bis zum ersten Ende verläuft, welches schwenkbar um die Achse (12) gelagert ist, und dass die Länge des Schlitzes (13) vorzugsweise grösser als die Länge der halben Platte (11) ist.

7. Bremsvorrichtung nach Anspruch 6, dadurch gekennzeichnet, dass der Bolzen (10) auf der Platte (9), die am Mitnehmer (5, 6) befestigt ist, abnehmbar und entlang der erwähnten Platte in Richtung auf die Achse (12) zu- oder von derselben wegbewegbar ist, welche auf der dem Bolzen (10) gegenüberliegenden Seite der Zugstange in der Grundplatte (1) befestigt ist, und zwar im wesentlichen im gleichen axialen Abstand zur Zugstange wie der Bolzen (10), wodurch die Hebelübersetzung (L), d.h. der Abstand vom Zentrum des Bolzens (10) zum Zentrum der Achse (12), veränderbar ist.

8. Bremsvorrichtung nach einem der vorstehenden Ansprüche, dadurch gekennzeichnet, dass eine Klinke (24) schwenkbar in der Grundplatte (1) befestigt ist, mit zwei Enden, wobei das eine Ende mit dem Mitnehmer (5, 6) im Eingriff steht, um eine Vorwärtsbewegung der Zugstange (6) in bezug auf die Grundplatte (1) zu verhindern, und das andere Ende schwenkbar mit einer Stange (29) verbunden ist, die ein Bestandteil eines elektrisch gesteuerten elektromagnetischen Ventils (30) ist, und die gegen die Wirkung einer Feder (32) nach hinten verschiebbar ist, wodurch die Klinke (24) vom Mitnehmer (5, 6) lösbar ist.

9. Bremsvorrichtung nach einem der vorstehenden Ansprüche, dadurch gekennzeichnet, dass eine Leitung (20, 21) für die hydraulische Flüssigkeit von jedem hydraulischen Zylinder (17, 19) zu einem elektrisch gesteuerten hydraulischen Ventil (22) führt, von wo eine einzelne Leitung (23) für die hydrualische Flüssigkeit zu den Bremsen des Anhängers führt.

10. Bremsvorrichtung nach den Ansprüchen 8 und 9, dadurch gekennzeichnet, dass das elektrisch gesteuerte hydraulische Ventil (22) derart angeordnet ist, dass es die Verbindung zwischen dem einen hydraulischen Zylinder (17) und den Bremsen des Anhängers unterbricht und die Verbindung zwischen dem zweiten hydraulischen Zylinder (19) und den Bremsen des Anhängers herstellt, wenn im Zugfahrzeug der Rückwärtsgang eingeschaltet wird, und dass die Stange (29) des elektromagnetischen Ventils (30) die Klinke (24) aus deren Sperrstellung in bezug auf den Mitnehmer (5, 6) herauszieht, wenn der Rückwärtsgang eingeschaltet wird, wobei die Impulse zum hydraulischen Ventil (22) und zum elektromagnetischen Ventil (30) vom Rückfahrscheinwerferkontakt des Zugfahrzeugs kommen.

## Revendications

1. Dispositif de freinage hydraulique pour remorques et semblables, comprenant une base (1) dans laquelle une barre de traction (2) est logée de telle manière que la barre de traction (2) peut se déplacer par rapport à la base (1) en deux directions opposées, et deux cylindres hydrauliques (17, 19) qui sont disposés dans la base (1), l'un des cylindres hydrauliques agissant lors de sa mise en service sur les freins de la remorque dans une direction de marche, et l'autre cylindre hydraulique dans l'autre direction, caractérisé en ce que le dispositif est arrangé de telle manière que les deux cylindres hydrauliques (17, 18) sont actionnés par les mêmes moyens (11, 14, 15), et que la barre de traction (2) agit sur les moyens (11, 14, 15) de telle sorte que les moyens (11, 14, 15) actionnent l'un des cylindres hydrauliques (17, 19) quand la barre de traction de déplace par rapport à la base (1) dans ladite direction, et que les moyens (11, 14, 15) actionnent l'autre cylindre hydraulique (19, 17) quand la barre de traction (2) se déplace dans l'autre direction par rapport à la base (1).

2. Dispositif de freinage selon la revendication 1, caractérisé en ce que le moyen qui est prévu pour actionner les deux cylindres hydrauliques (17, 19) est attaché de manière stationnaire à la barre de traction et décrit un mouvement essentiellement linéaire qui est essentiellement parallèle au mouvement de la barre de traction.

3. Dispositif de freinage selon la revendication 1, caractérisé en ce que les moyens (11, 14, 15) sont actionnés par un poussoir en forme de douille (5, 6) qui est agencé autour de la barre de traction (2) de telle sorte que la barre de traction est libre en rotation par rapport au poussoir, et que le poussoir (5, 6) est essentiellement immobilisé dans la direction longitudinale de la barre de traction au moyen d un arrêt (7, 8) disposé de chaque côté du poussoir, vu dans la direction axiale de ce dernier.

4. Dispositif de freinage selon la revendication 3, le poussoir (5, 6) étant arrangé de telle sorte que sa position par rapport à la base (1) peut essentiellement être maintenue, caractérisé en ce qu'une plaque (9) essentiellement horizontale en position normale ayant une direction longitudinale qui est essentiellement perpendiculaire à la direction longitudinale du poussoir en forme de douille (5, 6), est montée sur le poussoir, la partie extérieure de la plaque (9) s'étendant préférablement radialement à l'extérieur du poussoir, et en ce que cette partie extérieure présente une cheville (10) essentiellement perpendiculaire à la plaque (9).

5. Dispositif de freinage selon la revendication 4, caractérisé en ce que les moyens d'actionnement des cylindres hydrauliques (17, 19) comprennent une plaque (11) allongée présentant une fente, dont l'une des extrémités pivote sur un axe (12) et est attachée à l'une des extrémités d'un bras (14), et dont l'autre extrémité est conformée en vue d'actionner le piston du cylindre hydraulique correspondant (17, 19).

6. Dispositif de freinage selon la revendication 5, caractérisé en ce que la fente (13) est pratiquée au centre de la plaque (11) et s'étend de l'autre extrémité de cette dernière jusqu'à la première extrémité qui pivote autour ledit axe (12), et que la longueur de la fente (13) est préférablement plus grande que la longueur de la moitié de la plaque (11).

7. Dispositif de freinage selon la revendication 6, caractérisé en ce que la cheville (10) de la plaque (9) montée sur le poussoir (5, 6) est détachable et déplaçable le long de ladite plaque en direction de l'axe (12) ou en s'éloignant de ce dernier, ledit axe étant attaché à la base (1) sur l'autre côté de la barre de traction par rapport à la cheville (10) et essentiellement à la même distance axiale de la barre de traction que la cheville (10), ce qui fait que le rapport du levier (L), c'est-à-dire la distance du centre de la cheville (10) au centre de l'axe (12), est variable.

8. Dispositif de freinage selon l'une quelconque des revendications précédentes, caractérisé en ce qu'un cliquet (24) est pivotablement fixé dans la base (1) et comporte deux extrémités, l'une des extrémités pouvant s'engager avec le poussoir (5, 6) afin d'empêcher la barre de traction (6) de se déplacer à l'avant par rapport à la base (1), et l'autre extrémité étant articulée à une tige (29) formant partie intégrale d'une valve solénoïde (30) à commande électrique et pouvant être reculée contre l'action d'un ressort (32), ce qui permet de dégager le cliquet (24) du poussoir (5, 6).

9. Dispositif de freinage selon l'une quelconque des revendications précédentes, caractérise en ce qu'une conduite (20, 21) pour le fluide hydraulique relie chaque cylindre hydraulique (17, 19) à une valve hydraulique (22) à commande électrique, d'où une seule conduite (23) pour le fluide hydraulique mène aux freins de la remorque.

10. Dispositif de freinage selon les revendications 8 et 9, caractérisé en ce que la valve hydraulique (22) à commande électrique est arrangée de telle sorte qu'elle coupe la connexion entre ledit cylindre hydraulique (17) et les freins de la remorque et ouvre la connexion entre le deuxième cylindre hydraulique (19) et les freins de la remorque quand la marche arrière est enclenchée dans le véhicule tracteur, et que la tige (29) de la valve solénoïde (30) retire le cliquet (24) de sa position d'arrêt par rapport au poussoir (5, 6) quand la marche arrière est enclenchée, les impulsions transmises à la valve hydraulique (22) et à la valve solénoïde (30) étant prises sur le contact des feux de marche arrière du véhicule tracteur.
